# FASCICULE DE BREVET EUROPEEN

(11) **EP 3 633 552 B1**
(45) Date de publication et mention de la délivrance du brevet: **12.07.2023**
(21) Numéro de dépôt: 19306258.5
(22) Date de dépôt: 02.10.2019
(51) Int. Cl.: G06V 10/764, G06V 10/82, G06V 40/16, G06N 3/08, G06N 3/045

(54) **PROCÉDÉS D'APPRENTISSAGE DE PARAMÈTRES D'UN RÉSEAU DE NEURONES À CONVOLUTION ET DE DÉTECTION D'ÉLÉMENTS D'INTÉRÊT VISIBLES DANS UNE IMAGE**
VERFAHREN ZUM LERNEN VON PARAMETERN IN EINEM NEURONALEN NETZWERK MIT KONVOLUTION UND ZUM ERKENNEN VON WICHTIGEN ELEMENTEN, DIE AUF EINEM BILD SICHTBAR SIND
METHODS FOR LEARNING OF PARAMETERS OF A CONVOLUTIONAL NEURAL NETWORK, AND DETECTION OF ELEMENTS OF INTEREST VISIBLE IN AN IMAGE

(30) Priorité: 03.10.2018 FR 1859175
(43) Date de publication de la demande: 08.04.2020
(73) Titulaire: Idemia Identity & Security France, 92400 Courbevoie (FR)
(72) Inventeur: JOURDAS, Cécile, 92400 COURBEVOIE (FR); CSILLAG, Dora, 92400 COURBEVOIE (FR); THIEBAUT, Maxime, 92400 COURBEVOIE (FR)
(74) Mandataire: Idemia

(56) Documents cités:
- IASONAS KOKKINOS: "UberNet: Training a `Universal' Convolutional Neural Network for Low-, Mid-, and High-Level Vision using Diverse Datasets and Limited Memory", ARXIV.ORG, CORNELL UNIVERSITY LIBRARY, 201 OLIN LIBRARY CORNELL UNIVERSITY ITHACA, NY 14853, 7 septembre 2016 (2016-09-07), XP080725010, DOI: 10.1109/CVPR.2017.579

## Description

### DOMAINE TECHNIQUE GENERAL

La présente invention concerne le domaine de l'apprentissage supervisé, et en particulier un procédé d'apprentissage de paramètres d'un réseau de neurones à convolution et un procédé de détection d'éléments d'intérêt visibles dans une image au moyen d'un réseau de neurones à convolution.

### ETAT DE L'ART

Les réseaux de neurones sont massivement utilisés pour la classification de données.

Lors d'une phase d'apprentissage automatique (généralement supervisé, c'est-à-dire sur une base de données de référence déjà classifiées), un réseau de neurones « apprend » et devient tout seul capable d'appliquer la même classification à des données inconnues.

Les réseaux de neurones à convolution, ou CNN (Convolutional Neural Networks) sont un type de réseau de neurones dans lequel le motif de connexion entre les neurones est inspiré par le cortex visuel des animaux. Ils sont ainsi particulièrement adaptés à un type particulier de tâche qui est l'analyse d'image, ils permettent en effet avec efficacité la reconnaissance d'éléments d'intérêt tels que des objets ou des personnes dans des images, en particulier dans des applications de sécurité (surveillance automatique, détection de menace, etc.). Pour cela, on apprend le CNN sur des bases d'images d'apprentissage, c'est-à-dire des images dans lesquelles les éléments d'intérêt ont été déjà « annotés », c'est-à-dire mis en évidence et étiquetés avec la catégorie d'élément correspondant.

On connait tout particulièrement une utilisation des CNN pour faire ce que l'on appelle de la « détection » d'objets, c'est-à-dire localiser dans une image des objets d'intérêt (piéton, visage, véhicule par exemple) au travers notamment d'une boite englobante. Une deuxième utilisation est le « tracking », c'est-à-dire du suivi temporel de ces éléments d'intérêt tels que des personnes ou des objets.

Aujourd'hui, ces techniques apportent satisfaction mais restent perfectibles. En effet, pour des applications de sécurité, il serait par exemple souhaitable de pouvoir détecter simultanément des personnes, leur visage et des véhicules à partir d'un seul et unique détecteur CNN. Cela n'est possible aujourd'hui notamment pour les deux raisons suivantes :
- Les algorithmes CNN reposent sur des bases d'apprentissages qui doivent être entièrement annotées (on parle d'apprentissage supervisé) et il est généralement difficile ou extrêmement coûteux d'avoir une seule et même base contenant l'ensemble des annotations. De même il n'est pas possible de fusionner deux bases de données d'apprentissage car celles-ci sont « partiellement » annotées l'une par rapport à l'autre. Par exemple si l'on considère une base de personnes et une base de véhicules, les véhicules ne sont pas annotés dans la base de personnes et vice-versa, ce qui constitue des faux négatifs qui perturberaient complètement l'apprentissage. Il faudrait manuellement ajouter les annotations manquantes, ce qui est un travail titanesque. On citera par exemple la base MS-COCO (la plus utilisée) qui contient seulement des annotations de personnes, de quelques animaux et de quelques objets, mais pas d'annotation de visages. On citera également par exemple la base de données WIDER qui contient des annotations de visage uniquement.
- L'état de l'art en termes de détection d'objets implique, que si l'une d'une première et d'une deuxième catégorie d'élément d'intérêt que l'on cherche à détecter est une sous-partie de l'autre (par exemple une personne et son visage), même en créant une base ad hoc il ne serait pas possible d'apprendre simultanément à un CNN à détecter les deux catégories du fait de leur inclusion. En effet, la partie commune se trouve en situation de « conflit » entre les deux catégories. Cela est notamment lié à la fonction de coût principale utilisée pour l'apprentissage, qui est la fonction « softmax cross entropy », qui n'est pas capable de gérer des catégories qui ne seraient pas mutuellement exclusives.

Aujourd'hui la seule solution est de générer plusieurs « détecteurs », i.e. d'apprendre plusieurs CNN chacun sur une base de données d'apprentissage différente (par exemple un pour les personnes, un pour les visages, et un pour les véhicules), plus d'analyser chaque image avec tous les CNN de sorte à détecter toutes les catégories d'éléments souhaitées. Cela complexifie le procédé et peut poser problème en cas de conflit entre les détections. De plus si l'on veut une qualité de détection constante pour un même temps de traitement, cela demande des ressources informatiques supplémentaires (processeur, carte graphique, mémoire) puisque plusieurs CNN sont lancés plutôt qu'un seul CNN.

IASONAS KOKKINOS : "UberNet : Training a 'Universal' Convolutional Neural Network for Low-, Mid-, and High-Level Vision using Diverse Datasets and Limited Memory", ARXIV.ORG, CORNELL UNIVERSITY LIBRARY, 201 OLIN LIBRARY CORNELL UNIVERSITY ITHACA, NY 14853, 7 septembre 2016, DOI: 10.1109/CVPR.2017.579, divulgue un réseau neuronal convolutif (CNN) qui gère conjointement les tâches de vision de bas, moyen et haut niveau dans une architecture unifiée qui est formée de bout en bout (en anglais, "end-to-end").

Il serait par conséquent souhaitable de disposer d'une nouvelle solution d'apprentissage d'un réseau de neurones à convolution qui puisse être « multi-catégories » tout en restant simple et fiable.

### PRESENTATION DE L'INVENTION

L'invention est définie dans les revendications.

Selon un premier aspect, la présente invention concerne un procédé selon la revendication 1.

Selon un deuxième aspect, l'invention concerne un procédé de détection selon la revendication 8.

Selon un troisième et un quatrième aspect, l'invention propose un produit programme d'ordinateur selon la revendication 9 et un moyen de stockage selon la revendication 10.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 est un schéma d'une architecture pour la mise en oeuvre des procédés selon l'invention ;
- la figure 2 représente un exemple d'architecture sur laquelle est basée un CNN pour la mise en oeuvre d'un mode de réalisation d'un procédé de détection de l'invention ;
- la figure 3 illustre schématiquement la mise en oeuvre d'un procédé d'apprentissage selon un mode de réalisation préféré de l'invention ;
- la figure 4 représente un exemple de vecteur de représentation généré lors de la mise en oeuvre d'un procédé d'association selon un mode de réalisation préféré de l'invention.

### DESCRIPTION DETAILLEE

### Notions

Selon plusieurs aspects complémentaires la présente invention peut impliquer :
- un procédé d'apprentissage d'un réseau de neurones à convolution (CNN) ;
- un procédé de détection d'éléments d'intérêt visibles dans une image ;
- un procédé d'association d'éléments d'intérêt visibles dans une image ;
- un procédé de suivi d'éléments d'intérêt visibles dans une vidéo constituée d'une séquence de K images (i.e. de frames).

Ici, le terme « élément d'intérêt » désigne toute représentation dans l'image/vidéo d'une entité dont on souhaite la détection/association/suivi dans une image/vidéo. Chaque élément d'intérêt est d'une catégorie donnée, correspondant à un type au sens sémantique. Par exemple, les catégories personne, visage, véhicule, plaque d'immatriculation, etc. peuvent être considérées : la catégorie véhicules recouvre l'ensemble de tous les véhicules (voiture/camion/bus...) quel que soit le modèle, la couleur, etc., la catégorie plaque d'immatriculation recouvre l'ensemble de toutes les plaques quel que soit le pays/région d'émission, la couleur, etc.

La « détection », ou « reconnaissance », est l'opération la plus basique, et désigne le simple marquage d'un élément d'intérêt d'une catégorie connue dans une image. La détection combine ainsi la localisation (détermination de la position et la taille d'une boite englobant l'élément d'intérêt, dite boite de détection) et la classification (détermination de sa catégorie).

Par « suivi », on entend comme expliqué avant le « tracking » de ces éléments d'intérêt pendant la durée de la vidéo, c'est-à-dire l'identification continue d'un même élément détecté d'image en image où il est présent de sorte à déterminer le déplacement de l'entité correspondante au cours du temps.

Pour cela, on référence chaque élément d'intérêt avec un identifiant, l'ensemble des occurrences d'un élément d'intérêt pour un identifiant donné étant appelé une « track ».

On fera la différence entre la « détection » et « l'identification » : alors que la détection se fait image par image, et ne fait pas de distinction entre les différents éléments d'une même catégorie, l'identification affecte aux détections les bons identifiants de sorte à ce que deux détections de la même entité sur deux images différentes aient le même identifiant, i.e. fasse partie de la même track. Par exemple, supposant que sur une première image soient identifiés comme « personne 1 » et « personne 2 » deux éléments de catégorie personne et que soient détectés dans une deuxième image à nouveau deux éléments de catégorie personne, l'identification permet de déterminer dans la deuxième image lequel est la personne 1/2 (voire même une personne 3)

L'identification peut en d'autres termes être vue comme la mise en correspondance d'un élément détecté avec une entité, c'est-à-dire la distinction entre les différents éléments de la même catégorie détectables dans une ou plusieurs images.

Par « association », on entend la mise en correspondance de deux éléments d'intérêt de catégories différentes mais liés.

Un premier élément d'intérêt d'une première catégorie et un deuxième élément d'intérêt d'une deuxième catégorie peuvent être associés s'ils présentent un lien, notamment s'ils font partie d'une même entité. En général, deux éléments d'intérêts de catégorie différentes associés sont référencés par un même identifiant, i.e. il y a un identifiant unique par entité.

Dans la suite de la description, on considérera le mode de réalisation d'une association de nature « sous-partie ». En d'autres termes, l'une de la première et de la deuxième catégorie d'élément d'intérêt est une sous-partie de l'autre, i.e. en fait partie. Arbitrairement, la présente description considère la deuxième catégorie comme étant une sous-partie de la première catégorie, mais l'inverse pourra naturellement être considéré. Selon un exemple, la deuxième catégorie est la catégorie visage et la première catégorie est la catégorie personne. Selon un autre exemple, la deuxième catégorie est la catégorie plaque d'immatriculation et la première catégorie est la catégorie véhicule.

A noter que l'invention ne sera pas limitée à une association de nature sous-partie, et on pourra par exemple considérer une association de deux catégories elles-mêmes sous-parties d'une troisième catégorie (par exemple une association visage-main).

On peut même envisager des cas d'association où il n'y a aucune relation partie/sous-partie que ce soit directement ou indirectement, par exemple personne et bagage.

Dans un cas où il y a plus de deux catégories d'élément d'intérêt qui peuvent être associées (par exemple, personne/visage/main), en particulier une première catégorie, une deuxième catégorie et une troisième catégorie, il suffit de définir une catégorie principale (la « partie ») et des catégories secondaires (les « sous-parties »), et on associera chaque catégorie secondaire à la catégorie principale. Par exemple, s'il y a personne/visage/main, chaque main sera associée à une personne et chaque visage sera associé à une personne, mais on ne tentera pas d'associer les mains et les visages (dans la mesure où cette association est connue par transitivité à partir des deux autres).

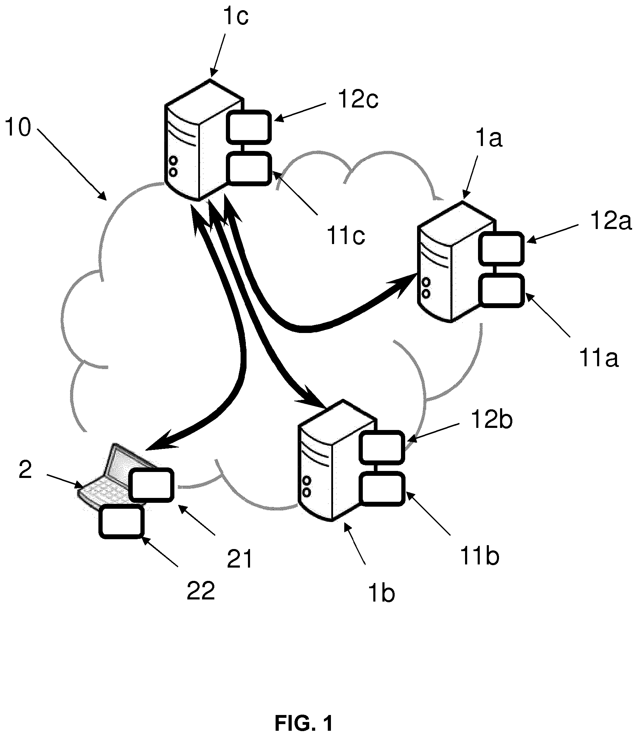

Les présents procédés sont mis en oeuvre au sein d'une architecture telle que représentée par la **figure 1****,** grâce à un ou plusieurs serveurs 1a, 1b, 1c et un terminal 2. Comme l'on verra, le procédé peut comprendre l'apprentissage d'un ou plusieurs réseaux de neurones à convolution, CNN, et le cas échéant le ou les serveurs 1a, 1b, 1c sont des équipements d'apprentissage associés. Le terminal 2 est quant à lui un équipement d'utilisation à proprement parler c'est-à-dire mettant en oeuvre tout ou partie du présent procédé), par exemple un équipement de traitement de données de vidéo-surveillance.

Dans tous les cas, chaque équipement 1a, 1b, 1c, 2 est typiquement un équipement informatique distant relié à un réseau étendu 10 tel que le réseau internet pour l'échange des données. Chacun comprend des moyens de traitement de données 11a, 11b, 11c, 21 de type processeur, et des moyens de stockage de données 12a, 12b, 12c, 22 telle qu'une mémoire informatique, par exemple un disque.

Au moins un des éventuels serveurs 1a, 1b, 1c stocke une base de données d'apprentissage, i.e. un ensemble d'images d'apprentissage, c'est-à-dire sur lesquelles des éléments d'intérêt ont été déjà annotés avec la catégorie d'élément correspondante (par opposition à l'image/vidéo dite d'entrée sur laquelle on cherche à faire la détection). Présentement, on a au moins deux, voire au moins trois, bases d'images d'apprentissage, stockées sur autant de serveurs distincts (exemple de deux serveurs 1a et 1b dans la figure 1).

Dans la figure 1, le serveur 1c est un serveur optionnel qui ne dispose quant à lui pas de base d'images d'apprentissage et qui met en oeuvre l'obtention du ou des CNN à partir des bases de données des serveurs 1a, 1b. Le rôle de ce serveur 1c peut cependant tout à fait être accompli par l'un ou l'autre des serveurs 1a, 1b.

### CNN

Un CNN contient généralement quatre types de couches traitant successivement l'information :
- la couche de convolution qui traite des blocs de l'entrée les uns après les autres ;
- la couche non linéaire qui permet d'ajouter de la non linéarité au réseau et donc d'avoir des fonctions de décision beaucoup plus complexes ;
- la couche de mise en commun (appelée « pooling ») qui permet de regrouper plusieurs neurones en un seul neurone ;
- la couche entièrement connectée qui relie tous les neurones d'une couche à tous les neurones de la couche précédente.

La fonction d'activation de couche non linéaire *NL* est typiquement la fonction *ReLU* (Rectified Linear Unit, i.e. Unité de Rectification Linéaire) qui est égale à *f(x) = max(0, x)* et la couche de pooling (notée *POOL*) la plus utilisée est la fonction *MaxPool2×2* qui correspond à un maximum entre quatre valeurs d'un carré (on met en commun quatre valeurs en une seule).

La couche de convolution, notée *CONV,* et la couche entièrement connectée, notée *FC*, correspondent généralement à un produit scalaire entre les neurones de la couche précédente et les poids du CNN.

Les architectures typiques de CNN empilent quelques paires de couches *CONV* → *NL* puis ajoutent une couche *POOL* et répètent ce schéma *[(CONV* → *NL)^{p}* → *POOL]* jusqu'à obtenir un vecteur de sortie de taille suffisamment petite, puis terminent par une ou deux couches entièrement connectées *FC*.

En analyse d'image, il n'y a pas toujours de couches non-linéaires *NL* ni même de couches entièrement connectées *FC*.

L'homme du métier pourra par exemple se référer aux CNN décrits dans les documents *YOLO9000: Better, Faster, Stronger* - *Joseph Redmon, Ali Farhadi ,* *https:*//*arxiv.org*/*abs*/*1612.08242*, *Faster R-CNN: Towards Real-Time Object Détection with Region Proposai Networks,* *https:*//*arxiv.org*/*abs*/*1506.01497*, ou leurs dérivés.

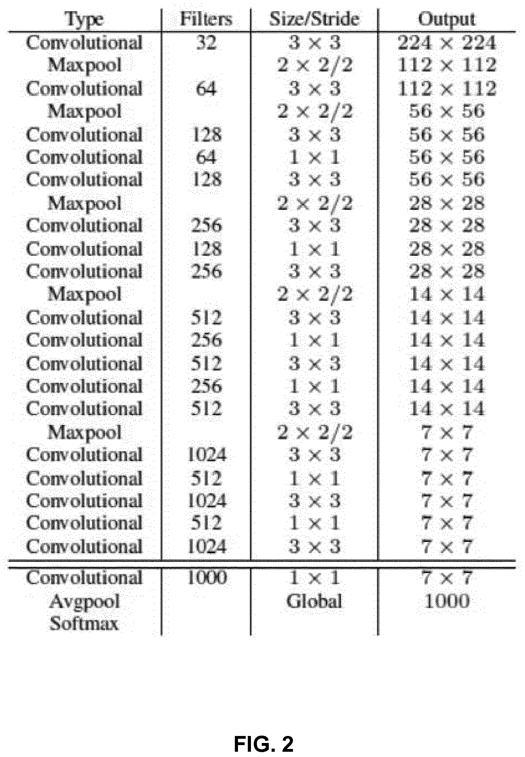

Dans la suite de la présente description, on prendra en particulier un exemple de CNN basé sur l'architecture « Darknet-19 » représentée dans la **figure 2** et décrite dans le document *YOLO9000,* qui comprend 19 couches de convolution *CONV,* 5 couches de pooling *MaxPool2x2* (Alternativement, on pourra également citer la version « Darknet-53 », à 53 couches de convolution *CONV*, ou n'importe quelle architecture de type *VGG, RESNET, DENSNET,* etc.).

En reprenant l'exemple de Darknet-19, on pourra construire un CNN de détection en prenant son tronc commun (i.e. la partie s'étendant jusqu'au double trait horizontal dans la figure 2) et en y ajoutant éventuellement trois couches de convolution présentant 1024 filtres de taille 3×3, et surtout une dernière couche de convolution CONV présentant avantageusement des filtres de taille 1x1, qui agit comme couche dite « d'encodage » et présente une sortie de taille C (i.e. présente un nombre de filtres égale à la taille souhaitée du vecteur de représentation en sortie, voir plus loin). Alternativement, une couche entièrement connectée FC peut être utilisée comme couche d'encodage.

En effet, l'objectif d'une méthode à base de CNN est de décrire le plus précisément possible et de façon répétable le contenu d'une image sous forme d'un vecteur contenant toutes les informations des éléments à détecter, c'est ce que permet la couche d'encodage. Ainsi, la couche d'encodage génère un vecteur de représentation des éléments d'intérêt détectés.

L'image est découpée spatialement en S cellules (par exemple des cellules de 7x7), chaque cellule dispose de *B* 'boites de description' (typiquement, *B*=*2 ou 3*), qui indiquent la présence d'un ou plusieurs éléments d'intérêt (jusqu'à *B* éléments) dans cette cellule, et constituent ainsi des boites de détection « candidates ». La bonne boite de détection est celle qui englobe au mieux (c'est-à-dire au plus près) l'élément d'intérêt correspondant.

La présence d'une entité dans une boite de description se traduit à minima par la donnée de sa position dans la cellule et de sa catégorie, codée sous la forme du vecteur dit « de représentation » de C valeurs généré par la couche d'encodage. Généralement, le vecteur comprend au moins cinq valeurs :
- Coordonnées *x*/*y* du centre de la boite de description (en fraction de la taille de la cellule) ;
- Longueur/largeur *w*/*h* de la boite (en fraction de la taille de la cellule) ;
- Identifiant c de la catégorie de l'élément d'intérêt

Le code total de description d'une image est la concaténation de tous les vecteurs de représentation des boites de description, soit de longueur *S*B*C*.

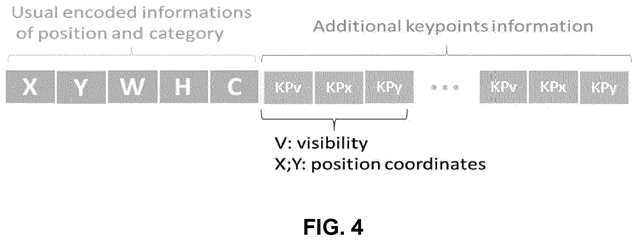

De façon préférée, en référence à la **figure 4****,** au moins certains vecteurs de représentation (ceux pour un élément d'intérêt d'une catégorie donnée, par exemple les personnes) sont allongés, i.e. se voient concaténer des valeurs descriptives d'au moins une structure géométrique caractéristique de ladite catégorie, en particulier lesdites valeurs descriptives comprennent avantageusement au moins deux valeurs de position (coordonnées *KPx*/*KPy*) et/ou une valeur de visibilité (valeur booléenne *KPv).* De façon particulièrement préférée, il y a au moins trois structures géométriques caractéristiques, c'est-à-dire au moins neuf valeurs descriptives additionnelles, comme l'on verra plus loin.

Ainsi, la détection des structures géométriques caractéristiques peut être accomplie de façon simultanée avec la détection des éléments d'intérêt, sans surcout de temps et sans dégradation des performances.

Par « structure géométrique caractéristique », on entend tout particulièrement un point caractéristique (en anglais « keypoint »), mais également une forme telle qu'un polygone, un maillage, etc. et de façon générale tout objet graphique facilement repérable sur tous les éléments de cette catégorie. De façon particulièrement préférée, lorsque l'un de la première catégorie et de la deuxième catégorie est une sous-partie de l'autre, on choisit des structures géométriques caractéristiques communes à la première catégorie et à la deuxième catégorie. Dans l'exemple visage/personne, on pourra ainsi par exemple prendre les deux yeux et le nez : en effet, il s'agit de structures géométriques d'une forme très particulière, caractéristiques aussi bien d'une personne que d'un visage.

L'utilisation de ces structures géométriques caractéristiques « communes » permet très astucieusement de réaliser comme on va le voir plus tard l'association d'éléments de deux catégories dans l'image, et ce de façon très fiable.

Dans la suite de la description, on prendra l'exemple dans lequel lesdites structures géométriques sont des points, et par exemple on annotera les yeux ou le nez d'un visage comme des points.

Avantageusement on peut encoder d'autres informations sur ce code sur le vecteur de représentation (d'autres boites englobantes, une information sur l'action en cours, un numéro de plaque immatriculation d'un véhicule, etc.)

### Procédé d'apprentissage

Selon un premier aspect, l'invention concerne un procédé d'apprentissage de paramètres d'au moins un réseau de neurones à convolution, CNN, pour détection d'éléments visibles dans des images, à partir d'une pluralité de base d'images d'apprentissage dans lesquels lesdits éléments sont déjà annotés, i.e. localisés et classifiés (la catégorie est déterminé). Chaque base d'images est en effet avantageusement associée à un ensemble de catégories d'élément d'intérêt, les éléments d'intérêt annotés dans les images d'une base étant ceux appartenant à une catégorie dudit ensemble de catégories associé à la base. On cherche en particulier à détecter les éléments d'intérêts d'au moins deux catégories, dont une première catégorie et une deuxième catégorie. On comprendra bien que le présent CNN ne fait qu'une seule tâche, à savoir la détection d'éléments d'intérêts, mais arrive à le faire sur toutes les catégories d'éléments d'intérêt associées à l'une ou l'autres des bases d'image d'apprentissage, i.e. le procédé d'apprentissage ne fait qu'augmenter le spectre de détection malgré l'absence de base d'apprentissage « globale ». Cela s'entend par opposition à des CNN dits multi-tâches (*voir le document lasonas Kokkinos, UberNet: Training a 'Universal' Convolutional Neural Network for Low-, Mid-, and High-Level Vision using Diverse Datasets and Limited Memory*) qui sont capables de réaliser simultanément plusieurs tâches indépendantes sur une même image d'entrée, comme détection et segmentation.

Comme expliqué avant, pour les éléments d'au moins une catégorie donnée peuvent être déjà annotées une ou plusieurs structures géométriques caractéristiques, i.e. leurs coordonnées dans l'image connues. On comprend que les structures géométriques caractéristiques ne sont pas toujours visibles et donc ne sont renseignés que s'ils sont visibles. Par exemple une personne de profil peut être détectée en tant qu'élément de catégorie personne (son visage aussi), mais son oeil gauche ou droit ne sera pas visible car derrière la tête.

Le présent procédé contourne astucieusement le problème de l'incompatibilité des différentes bases et permet d'avoir un CNN commun appris directement à partir d'une pluralité de bases d'images d'apprentissage, et ce en un seul apprentissage. Cela est avantageusement réalisé par les moyens de traitement de données 11c du serveur 1c connecté aux autres serveurs 1a, 1b des bases de données. Ledit CNN est dit « commun » à plusieurs bases de données (en d'autres termes on a un seul CNN qui apprend à la fois sur plusieurs bases de données), par opposition aux CNN connus qui ne pouvaient apprendre chacun que sur une base (il fallait alors autant de CNN que de bases).

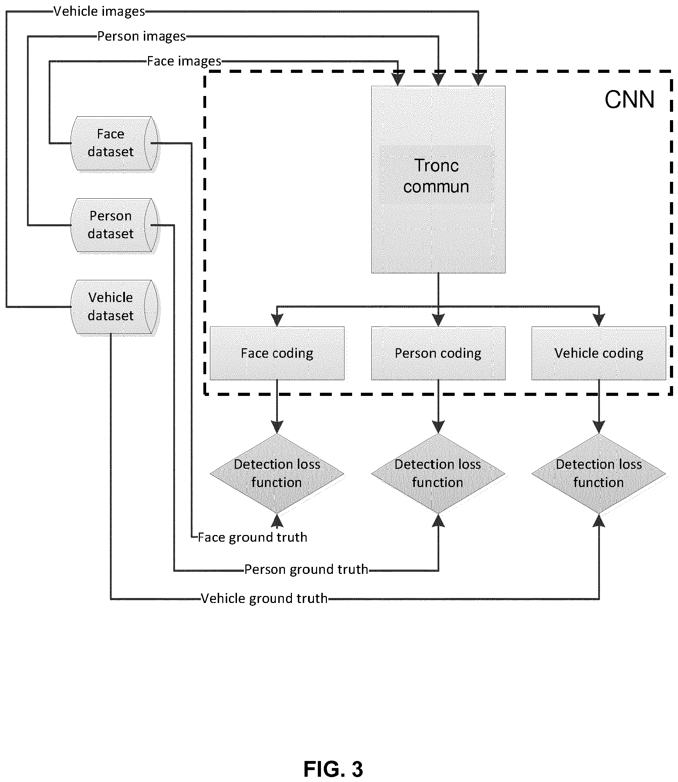

En référence à la **figure 3****,** ladite pluralité de bases d'images d'apprentissage comprend avantageusement au moins une première base d'images d'apprentissage (dans lesquelles au moins les éléments d'intérêt de la première catégorie sont déjà annotés) et une deuxième base (dans lesquelles au moins les éléments d'intérêt de la deuxième catégorie sont déjà annotés), voire une troisième base (dans lesquelles au moins les éléments d'intérêt d'une catégorie autre que les première et deuxième catégories, sont déjà annotés).

De manière préférée, l'une de la première et la deuxième catégorie (arbitrairement la deuxième) est une sous-partie de l'autre, de sorte à permettre une détection d'éléments imbriqués l'un dans l'autre, ce qui n'était comme expliqué jusqu'à présent pas possible car la partie commune se trouve en situation de « conflit » entre les deux catégories. En effet, le présent procédé apprend simultanément sur deux bases différentes, chacune annotant de manière distincte et sans superposition possible une seule des deux catégories, et n'est donc plus affecté par le problème d'interférence des éléments de ces deux catégories l'une faisant partie de l'autre.

Par exemple, l'ensemble de catégories d'élément d'intérêt associé à la première base comprend la catégorie personne (la première catégorie dans les exemples), l'ensemble de catégories d'élément d'intérêt associé à la deuxième base comprend la catégorie visage (la deuxième catégorie), et l'ensemble de catégories d'élément d'intérêt associé à l'éventuelle troisième base comprend une ou plusieurs catégories d'objets inanimés, comme la catégorie véhicule ou au moins une sous-catégorie de véhicule (par exemple, les sept catégories voiture, camion, bus, deux roue, bicyclette, avion et bateau). On comprend cependant que l'on n'est limité à aucun choix de bases/catégories.

Pour cela, on utilise comme CNN commun un CNN présentant un tronc commun et une pluralité de couches d'encodage chacune spécifique d'une de ladite pluralité de bases d'images d'apprentissage.

En d'autres termes, comme l'on voit dans la figure 3, l'architecture du CNN présente non pas une couche d'encodage commune à l'ensemble des modalités (c'est-à-dire les différents ensembles de catégories), mais une couche d'encodage spécifique à certaines des modalités.

De façon particulièrement préférée, ledit tronc commun comprend toutes les couches présentant des paramètres variables autres que la couche d'encodage, et en particulier début le début. Dans l'exemple de la figure 2, le tronc commun s'étend jusqu'au double trait horizontal.

En d'autres termes, en supposant qu'on a trois bases d'images d'apprentissage comme dans l'exemple de la figure 3, alors on a trois couches d'encodage et pour chaque image d'apprentissage prise en entrée on utilise la couche d'encodage correspondant à la base dont vient l'image d'apprentissage.

On comprend donc que toutes les images d'apprentissage participent à l'apprentissage du tronc commune, mais que seules les images d'une base participent à l'apprentissage de chaque couche d'encodage.

Les diverses couches d'encodage sont comme expliqué composées chacune avantageusement d'une couche de convolution avec des filtres préférentiellement de taille 1x1, et dont la taille de sortie C (le nombre de filtres) correspond à la taille du vecteur de représentation (typiquement 8 pour les personnes et les visages, et 14 pour les véhicules s'il y a 7 sous-catégories comme dans l'exemple ci-dessus, plus lesdites valeurs descriptives d'au moins une structure géométrique caractéristique pour au moins l'une d'entre elles). Les diverses couches d'encodage sont typiquement disposées en parallèle.

En complément, on utilise avantageusement comme représenté sur la figure 3 une pluralité de fonctions de coût à nouveau chacune spécifique d'une de ladite pluralité de bases d'images d'apprentissage.

On rappelle qu'une fonction de coût (dite de « loss », c'est-à-dire de perte) spécifie comment l'apprentissage du CNN pénalise l'écart entre le signal prévu et réel. Plus précisément, pour une donnée d'entrée (image d'apprentissage), la fonction de coût permet de quantifier une « erreur » entre la sortie obtenue par le CNN (les éléments détectés) et la sortie théorique (les éléments annotés). L'apprentissage vise à modifier les paramètres du CNN de sorte à diminuer graduellement l'erreur telle que calculée par la fonction de coût. On connait par exemple la fonction *Softmax* (ou fonction exponentielle normalisée), ou encore la fonction de Huber, des normes comme la norme L1, etc.

Pour réaliser l'apprentissage à proprement parler, la technique classique dite de rétropropagation du gradient propage « vers l'arrière » l'erreur calculée de sorte à mettre à jour les paramètres de toutes les couches.

Dans le présent mode de réalisation, on utilise pour ce faire des fonctions de coût différentes selon la base d'où vient chaque image d'apprentissage. Plus précisément, on tire aléatoirement de façon itérative des images d'apprentissage dans la pluralité de base (i.e. chaque image peut être issue de n'importe quelle base), et on fait varier pour chacune les poids et paramètre du CNN sur la base de la fonction de coût correspondant à la base dont elle provient.

De façon particulièrement préférée, on met en oeuvre un paradigme d'apprentissage dit en « batch », c'est-à-dire que pour un ensemble d'images d'apprentissage issues indifféremment des diverses bases l'on calcule d'abord les erreurs (avec la fonction de coût correspondante) sans mettre à jour les paramètres, puis on additionne ces différentes erreurs, et lorsque l'ensemble des images dudit ensemble est passé une fois dans le CNN, on applique la rétropropagation dans tout le CNN en utilisant l'erreur totale (sommée).

Le CNN commun pourra être utilisé comme détecteur « multi-catégories » lorsqu'appliqué aux images d'entrée. Naturellement il est déjà possible de faire des détecteurs multi-catégories à partir d'une seule base de données si celle-ci a déjà les éléments de plusieurs catégories annotés, mais on est limité à ces catégories. Le CNN commun de la présente invention permet de combiner n'importe quelles bases de données d'apprentissage, et donc d'être multi-catégories de façon complètement libre.

On comprend que le fait de multiplier les couches d'encodage et les fonctions de coût permet, sans augmenter sensiblement la taille du réseau, de ne pas avoir une détection pénalisée par une autre et d'avoir la même efficacité qu'avec une pluralité de détecteurs. De plus on a un gain de temps significatif dans l'apprentissage puisque celui-ci peut être simultané pour toutes les bases.

A noter qu'il reste tout à fait possible, si l'on souhaite détecter un nombre élevé de catégories différents, d'apprendre d'autres CNN, qu'ils soient chacun conforme à l'invention (CNN commun à plusieurs bases de données) ou conformes à l'état de l'art (CNN spécifique à une base de données). Par exemple ou pourrait avoir un premier CNN commun détecteur multi-catégories, et un deuxième CNN détecteur dédié à une autre catégorie complexe à identifier apprise par conséquent sur une base de données particulière.

En complément, l'apprentissage du ou des CNN peut être mis en oeuvre à partir d'au moins une base d'images d'apprentissage dans lesquelles sont en outre déjà annotées des structures géométriques caractéristiques, en particulier les structures géométriques caractéristiques d'un au moins une catégorie donnée (la première catégorie).

Comme expliqué avant, le CNN comprend alors une couche d'encodage pour la génération d'un vecteur de représentation des éléments d'intérêt à détecter comprenant pour au moins ladite première catégorie d'élément d'intérêt à détecter, au moins une (avantageusement trois, en particulier cordonnées et visibilité) valeur descriptive d'au moins une (avantageusement trois) structure géométrique caractéristique (en particulier point caractéristique) de ladite première catégorie d'élément d'intérêt. On comprendra à nouveau que toutes les structures géométriques caractéristiques ne sont pas forcément visibles et que naturellement seuls celles qui le sont peuvent être détectées. Ainsi, même si l'on tente de détecter trois points caractéristiques, on n'y arrivera pas forcément pour les trois (mais on indiquera alors le ou lesquels ne sont pas visibles).

### Détection

Selon un deuxième aspect est proposé un procédé de détection d'éléments d'intérêt visibles dans une image (d'entrée, par opposition aux images d'apprentissage), par les moyens de traitement de données 21 du terminal 2, au moyen d'au moins un CNN appris conformément au procédé selon le premier aspect.

Ce procédé de détection comprend deux étapes : dans une première étape est mis en oeuvre l'apprentissage d'un CNN tel que défini précédemment, et dans une deuxième étape les moyens de traitement de données 21 du terminal 2 traitent ladite image, au moyen du CNN, de sorte à détecter le ou les éléments d'intérêt qui y sont visibles.

Ce procédé est mis en oeuvre de façon classique, on comprend juste comme expliqué que la détection peut être « multi-catégories ».

A nouveau, d'autres CNN peuvent être utilisés comme détecteurs d'éléments d'intérêt d'autres catégories.

### Association & suivi

Le présent procédé de détection peut être utilisé dans un procédé d'association d'éléments d'intérêt visibles dans une image, mis en oeuvre par les moyens de traitement de données 21 du terminal 2.

Plus précisément, peut être mise en oeuvre la détection d'au moins un élément d'intérêt d'une première catégorie et d'au moins un élément d'intérêt d'une deuxième catégorie différente de la première catégorie visibles dans ladite image, conformément au procédé de détection selon le deuxième aspect, puis chaque élément d'intérêt de la première catégorie détecté dans ladite image est associé avec un élément d'intérêt de la deuxième catégorie détecté dans ladite image.

On rappelle que deux éléments associés sont considérés comme étant liés à, et en particulier faisant partie de, la même entité, comme expliqué précédemment.

On notera qu'il est toujours possible qu'il reste un élément de la première ou de la deuxième catégorie « orphelin » s'il n'y pas le même nombre d'éléments de la première et de la deuxième catégorie ayant été détectés, i.e. si par exemple celui avec lequel un élément aurait dû être associé est masqué ou que la détection n'a pas fonctionné.

Chaque élément d'intérêt est avantageusement référencé avec un identifiant, et de façon préférée l'association de deux éléments se traduit en associant au second l'identifiant du premier (i.e. les deux sont référencés sous le même identifiant).

L'association peut être mise en oeuvre de façon classique (typiquement par détection d'inclusion d'un deuxième élément dans le premier élément), mais de façon particulièrement préférée, on utilisera un procédé innovant d'association d'éléments d'intérêt dans une image tel que décrit dans la demande FR1859162, impliquant le CNN à vecteur de représentation allongé décrit ci-avant.

L'idée astucieuse est de ne pas comparer directement les éléments de la première catégorie et les éléments de la deuxième catégorie, mais partant du principe que la deuxième catégorie est une sous-partie de la première catégorie et que les points caractéristiques de la première catégorie d'élément d'intérêt sont également des points caractéristiques de la deuxième catégorie d'élément d'intérêt, de comparer directement les points caractéristiques de la première catégorie avec les éléments de la deuxième catégorie : les points caractéristiques peuvent être vus comme une « deuxième détection » d'un élément de la deuxième catégorie, qu'il est facile de mettre en correspondance avec celui-ci.

Enfin, le présent procédé d'association peut être utilisé dans un procédé de suivi d'éléments d'intérêt visibles dans une vidéo constituée d'une séquence de K images.

### Produit programme d'ordinateur

Selon un troisième et un quatrième aspects, l'invention concerne un produit programme d'ordinateur comprenant des instructions de code pour l'exécution (en particulier sur les moyens de traitement de données 11a, 11b, 11c, 21 d'un ou plusieurs serveurs 1a, 1b, 1c ou du terminal 2) d'un procédé selon le premier aspect de l'invention d'apprentissage de paramètres d'un CNN ou un procédé selon le deuxième aspect de l'invention de détection d'éléments d'intérêt visibles dans une image ; ainsi que des moyens de stockage lisibles par un équipement informatique (une mémoire 12a, 12b, 12c, 22 d'un ou plusieurs serveurs 1a, 1b, 1c ou du terminal 2) sur lequel on trouve ce produit programme d'ordinateur.

## Revendications

1. Procédé d'apprentissage de paramètres d'un réseau de neurones à convolution, CNN, par des moyens de traitement de données (11a, 11b, 11c) d'au moins un serveur (1a, 1b, 1c), pour détection d'éléments d'intérêt d'au moins une première catégorie d'éléments d'intérêts et une deuxième catégorie d'éléments d'intérêts visibles dans une ou plusieurs images, la deuxième catégorie d'éléments d'intérêts étant une sous-partie de la première catégorie d'éléments d'intérêts, le procédé étant **caractérisé en ce qu'**il est mis en oeuvre à partir d'une pluralité de bases d'images d'apprentissage dans lesquelles lesdits éléments d'intérêt sont déjà annotés, chaque base d'images d'apprentissage étant associée à un ensemble de catégories d'élément d'intérêt, les éléments d'intérêt annotés dans les images d'une base étant ceux appartenant à une catégorie dudit ensemble associé à la base, lesdits ensembles de catégories étant différents d'une base à l'autre et tels que l'ensemble de catégories d'éléments d'intérêt associé à une première base de ladite pluralité de bases d'images d'apprentissage comprend la première catégorie et l'ensemble de catégories d'éléments d'intérêt associé à une deuxième base de ladite pluralité de bases de bases d'images d'apprentissage comprend la deuxième catégorie, le CNN étant un CNN commun à ladite pluralité de bases d'images d'apprentissage, et présentant un tronc commun et une pluralité de couches d'encodage chacune spécifique d'une de ladite pluralité de bases d'images d'apprentissage, chaque couche d'encodage étant une couche de convolution ou une couche entièrement connectée, générant un vecteur de représentation des éléments d'intérêt détectés.

2. Procédé selon la revendication 1, comprenant l'utilisation d'une pluralité de fonctions de coût chacune spécifique d'une de ladite pluralité de bases d'images d'apprentissage.

3. Procédé selon la revendication 2, comprenant le tirage aléatoire itératif d'images d'apprentissage dans la pluralité de bases, et pour chaque image d'apprentissage tirée, et le calcul d'une erreur d'apprentissage sur la base de la fonction de coût spécifique de la base de laquelle vient ladite image d'apprentissage tirée.

4. Procédé selon la revendication 3, comprenant en outre, pour un ensemble desdites images d'apprentissages tirées aléatoirement dans la pluralité de base, la somme des erreurs d'apprentissage calculées pour chacune des images d'apprentissage dudit ensemble, et la mise à jour des paramètres du CNN en fonction de ladite somme.

5. Procédé selon l'une des revendications 1 à 4, dans lequel ledit tronc commun du CNN comprend toutes les couches présentant des paramètres variables autres que les couches d'encodage.

6. Procédé selon l'une des revendications 1 à 5, dans lequel ladite pluralité de bases d'images d'apprentissage comprend en outre une troisième base, l'ensemble de catégories d'élément d'intérêt associé à la première base comprenant la catégorie personne, l'ensemble de catégories d'élément d'intérêt associé à la deuxième base comprenant la catégorie visage, et l'ensemble de catégories d'élément d'intérêt associé à la troisième base comprenant la catégorie véhicule ou au moins une sous-catégorie de la catégorie véhicule.

7. Procédé selon l'une des revendications 1 à 6, au moins une base d'images d'apprentissage présente des images d'apprentissage dans lesquelles des structures géométriques caractéristiques d'éléments d'intérêt sont également annotées, la couche d'encodage spécifique de cette base d'images d'apprentissage générant un vecteur de représentation des éléments d'intérêt détectés comprenant, pour au moins une catégorie donnée d'élément d'intérêt à détecter, au moins une valeur descriptive d'au moins une structure géométrique caractéristique de ladite catégorie d'élément d'intérêt.

8. Procédé de détection d'éléments d'intérêt visibles dans une image, par des moyens de traitement de données (21) d'un terminal (2), au moyen d'un CNN appris conformément au procédé selon l'une des revendications 1 à 7.

9. Produit programme d'ordinateur comprenant des instructions de code pour l'exécution d'un procédé selon l'une des revendications 1 à 8 d'apprentissage de paramètres d'un réseau de neurones à convolution, CNN, ou de détection d'éléments d'intérêt visibles dans une image, lorsque ledit programme est exécuté par un ordinateur.

10. Moyen de stockage lisible par un équipement informatique sur lequel un produit programme d'ordinateur comprend des instructions de code pour l'exécution d'un procédé selon l'une des revendications 1 à 8 d'apprentissage de paramètres d'un réseau de neurones à convolution, CNN, ou de détection d'éléments d'intérêt visibles dans une image.

## Patentansprüche

1. Verfahren zum Lernen von Parametern eines neuronalen Faltungsnetzwerks, CNN, durch Datenverarbeitungseinrichtungen (11a, 11b, 11c) mindestens eines Servers (1a, 1b, 1c), zur Erkennung interessierender Elemente mindestens einer ersten Kategorie interessierender Elemente und einer zweiten Kategorie interessierender Elemente, die in einem oder mehreren Bildern sichtbar sind, wobei die zweite Kategorie interessierender Elemente ein Teilbereich der ersten Kategorie interessierender Elemente ist, wobei das Verfahren **dadurch gekennzeichnet ist, dass** es ausgehend von einer Vielzahl von Lernbilddatenbanken durchgeführt wird, in denen die interessierenden Elemente bereits annotiert sind, wobei jede Lernbilddatenbank einer Einheit von Kategorien interessierender Elemente zugeordnet ist, wobei die annotierten interessierenden Elemente in den Bildern einer Datenbank diejenigen sind, die zu einer Kategorie der der Datenbank zugeordneten Einheit gehören, wobei die Einheiten von Kategorien sich von einer Datenbank zur anderen unterscheiden und so sind, dass die einer ersten Datenbank der Vielzahl von Lernbilddatenbanken zugeordnete Einheit von Kategorien interessierender Elemente die erste Kategorie enthält, und die einer zweiten Datenbank der Vielzahl von Lernbilddatenbanken zugeordnete Einheit von Kategorien interessierender Elemente die zweite Kategorie enthält, wobei das CNN ein der Vielzahl von Lernbilddatenbanken gemeinsames CNN ist und einen gemeinsamen Stamm und eine Vielzahl von Codierschichten aufweist, die je für eine der Vielzahl von Lernbilddatenbanken spezifisch ist, wobei jede Codierschicht eine Faltungsschicht oder eine vollständig verbundene Schicht ist, die einen Darstellungsvektor der erkannten interessierenden Elemente generiert.

2. Verfahren nach Anspruch 1, das die Verwendung einer Vielzahl von Kostenfunktionen enthält, die je für eine der Vielzahl von Lernbilddatenbanken spezifisch sind.

3. Verfahren nach Anspruch 2, das das iterative zufällige Abziehen von Lernbildern in der Vielzahl von Datenbanken, und für jedes abgezogene Lernbild, und die Berechnung eines Lernfehlers aufgrund der spezifischen Kostenfunktion der Datenbank enthält, von der das abgezogene Lernbild kommt.

4. Verfahren nach Anspruch 3, das außerdem, für eine Einheit der zufällig in der Vielzahl von Datenbanken abgezogenen Lernbilder, die Summe der für jedes der Lernbilder der Einheit berechneten Lernfehler, und die Aktualisierung der Parameter des CNN abhängig von der Summe enthält.

5. Verfahren nach einem der Ansprüche 1 bis 4, wobei der gemeinsame Stamm des CNN alle Schichten enthält, die andere variable Parameter als die Codierschichten aufweisen.

6. Verfahren nach einem der Ansprüche 1 bis 5, wobei die Vielzahl von Lernbilddatenbanken außerdem eine dritte Datenbank enthält, wobei die der ersten Datenbank zugeordnete Einheit von Kategorien interessierender Elemente die Kategorie Person enthält, die der zweiten Datenbank zugeordnete Einheit von Kategorien interessierender Elemente die Kategorie Gesicht enthält, und die der dritten Datenbank zugeordnete Einheit von Kategorien interessierender Elemente die Kategorie Fahrzeug oder zumindest eine Teilkategorie der Kategorie Fahrzeug enthält.

7. Verfahren nach einem der Ansprüche 1 bis 6, wobei mindestens eine Lernbilddatenbank Lernbilder aufweist, in denen charakteristische geometrische Strukturen interessierender Elemente ebenfalls annotiert sind, wobei die spezifische Codierschicht dieser Lernbilddatenbank einen Darstellungsvektor der erkannten interessierenden Elemente enthält, der für mindestens eine gegebene Kategorie zu erkennender interessierender Elemente mindestens einen deskriptiven Wert mindestens einer für die Kategorie interessierender Elemente charakteristischen geometrischen Struktur enthält.

8. Verfahren zur Erkennung von in einem Bild sichtbaren interessierenden Elementen durch Datenverarbeitungseinrichtungen (21) eines Endgeräts (2) mittels eines CNN, das gemäß dem Verfahren nach einem der Ansprüche 1 bis 7 gelernt wird.

9. Computerprogrammprodukt, das Codeanweisungen zur Ausführung eines Verfahrens nach einem der Ansprüche 1 bis 8 zum Lernen von Parametern eines neuronalen Faltungsnetzwerks, CNN, oder zur Erkennung von in einem Bild sichtbaren interessierenden Elementen enthält, wenn das Programm von einem Computer ausgeführt wird.

10. Speichereinrichtung, die von einer Datenverarbeitungsausrüstung lesbar ist, auf der ein Computerprogrammprodukt Codeanweisungen zur Ausführung eines Verfahrens nach einem der Ansprüche 1 bis 8 zum Lernen von Parametern eines neuronalen Faltungsnetzwerks, CNN, oder zur Erkennung von in einem Bild sichtbaren interessierenden Elementen enthält.

## Claims

1. Method for learning parameters of a convolutional neural network, CNN, using data processing means (11a, 11b, 11c) of at least one server (1a, 1b, 1c), in order to detect elements of interest in at least a first category of elements of interest and a second category of elements of interest visible in one or more images, the second category of elements of interest being a subportion of the first category of elements of interest, the method being **characterized in that** it is implemented based on a plurality of learning image bases in which said elements of interest are already annotated, each learning image base being associated with a set of categories of elements of interest, the elements of interest annotated in the images in a base being those belonging to a category of said set associated with the base, said sets of categories being different from one base to another and such that the set of categories of elements of interest associated with a first base of said plurality of learning image bases comprises the first category and the set of categories of elements of interest associated with a second base of said plurality of learning image bases comprises the second category, the CNN being a CNN common to said plurality of learning image bases, and having a common stem and a plurality of encoding layers each specific to one of said plurality of learning image bases, each encoding layer being a convolution layer or a fully connected layer, generating a representation vector of the detected elements of interest.

2. Method according to Claim 1, comprising using a plurality of cost functions each specific to one of said plurality of learning image bases.

3. Method according to Claim 2, comprising iteratively randomly drawing learning images from the plurality of bases and, for each drawn learning image, computing a learning error on the basis of the cost function specific to the base from which said drawn learning image originates.

4. Method according to Claim 3, furthermore comprising, for a set of said learning images drawn randomly from the plurality of bases, summing the learning errors computed for each of the learning images of said set, and updating the parameters of the CNN on the basis of said sum.

5. Method according to one of Claims 1 to 4, wherein said common stem of the CNN comprises all layers having variable parameters other than the encoding layers.

6. Method according to one of Claims 1 to 5, wherein said plurality of learning image bases furthermore comprises a third base, the set of categories of elements of interest associated with the first base comprising the person category, the set of categories of elements of interest associated with the second base comprising the face category, and the set of categories of elements of interest associated with the third base comprising the vehicle category or at least one subcategory of the vehicle category.

7. Method according to one of Claims 1 to 6, wherein at least one learning image base contains learning images in which characteristic geometric structures of elements of interest are also annotated, the encoding layer specific to this learning image base generating a representation vector of the detected elements of interest comprising, for at least one given category of elements of interest to be detected, at least one value describing at least one characteristic geometric structure of said category of elements of interest.

8. Method for detecting elements of interest visible in an image, using data processing means (21) of a terminal (2), by way of a CNN trained in accordance with the method according to one of Claims 1 to 7.

9. Computer program product comprising code instructions for executing a method according to one of Claims 1 to 8 for learning parameters of a convolutional neural network, CNN, or for detecting elements of interest visible in an image, when said program is executed by a computer.

10. Storage means able to be read by a computing equipment and on which a computer program product comprises code instructions for executing a method according to one of Claims 1 to 8 for learning parameters of a convolutional neural network, CNN, or for detecting elements of interest visible in an image.
